(19) Europäisches Patentamt / European Patent Office / Office européen des brevets

(11) **EP 3 217 043 A1**

(12) **EUROPEAN PATENT APPLICATION**

(43) Date of publication:
**13.09.2017   Bulletin 2017/37**

(51) Int Cl.:
*F16H 61/462* (2010.01)    *B60W 10/06* (2006.01)
*B60W 10/103* (2012.01)    *B60W 30/188* (2012.01)

(21) Application number: **16425021.9**

(22) Date of filing: **10.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Dana Rexroth Transmission Systems S.r.l.**
**38062 Arco (Trento) (IT)**

(72) Inventor: **The designation of the inventor has not yet been filed**

(74) Representative: **Bonatto, Marco et al**
**Barzanò & Zanardo Milano S.p.A.**
**Via Borgonuovo, 10**
**20121 Milano (IT)**

(54) **METHOD FOR AUTOMATICALLY CONTROLLING THE GEAR RATIO OF A TRANSMISSION OF A VEHICLE, CONTROL SYSTEM, VEHICLE AND COMPUTER PROGRAM FOR CARRYING OUT SUCH METHOD**

(57)    The method according to the invention, for automatically controlling the gear ratio of a transmission **(1, 1')** of a vehicle such as a wheel loader, comprises the step of determining the disturbance torque fraction (T_ext) of the load torque applied to the first input shaft **(3)** at a predetermined instant (i) on the basis of the rotational speed **(n_eng)** of the first input shaft **(3)** and of one or more of the following quantities: A) the torque (T_eng) applied to the engine shaft or to the first input shaft **(3)** by the primary engine **(29)**; B) the torque (T_c) applied at least to the first output shaft **(19)**; C) the rotational inertia of the primary engine (J_eng) reduced to the first input shaft **(3)**; D) the rotational inertia (J_htv) of the transmission **(1)** reduced to the first input shaft **(3)**.

Fig.1

## Description

### Field of the invention

The present invention relates to a method for automatically controlling the gear ratio of a transmission of a vehicle such as a wheel loader, excavator, telehandler and other earth moving vehicles of forestry vehicles such as skidders. The invention further relates to a control system for carrying out such method, to a vehicle provided with such control system and to a computer program containing instructions for carrying out such method. The method is particularly suited for preventing the stall or undue overloads of a vehicle engine, such as a diesel engine, in case of sudden loads which can hardly be provided, such as when a wheel loader enters a pile of sand, gravel, stones, other debris or other incoherent material.

### Background art

In off-highway applications, demands of work's efficiency and fuel's saving lead to advanced power train concepts as power-split transmissions. The adoption of a CVT concept ("Continuously Variable Transmission") in a wheel loader application is an example.

The degree of freedom of a CVT is its gear rate $r_{act}$.

In some off-highway applications as wheel loaders, the CVT concept requires challenging control performances. One of the most extreme vehicle manoeuvre from the torques/power point of view is the pile entering manoeuvre: during digging operations there is a high dynamic transition from driving (low transmission output torque at output high speed) to bucket filling (almost standstill, a bit slippage with high tractive effort), thus if the gear ratio cannot be reduced with the required dynamic, this will lead to a high engine overload and, in the worst case, to engine stalls.

A limiting factor is the CVT concept: such transmissions have two or more drive ranges and the pile will be approached most probably in the second range since in productive cycles the usual wheel loader entering speed into the material is between **5** to **10**kph. Therefore, there will be a sequential ratio reduction starting from the **2**nd range down to the **1**st range. In between one shift point has to be crossed. The most limiting factor is the implements work. The CVT has limited information about the PTO (Power Take-Off) power demand, thus it does not know the maximum engine power that can be requested to move vehicle (during digging the PTO power request can reach the **50**% of the available power).

All these unknown factors lead to potential engine overload conditions since the CVT *per se* does not know how much the ratio must be reduced to recover the engine and to prevent an engine stall.

In principle, predictive mathematical models of the tractive effort could be a solution for avoiding engine overload and engine stall. However, several factors limit their effectiveness in practice.

For example, the electronic control system and sensors of the vehicle in some cases do not provide all the necessary variables, the designers of the transmission control might not know all the variables and parameters of the complete vehicle, such as the inertia of the overall vehicle -which can be known only with rough approximations and can vary during the use of the vehicle- or the exact load torque of the implements.

In other cases the designers of the whole vehicle might have set unfavorable constraints in the monitored variables to be supplied to the logic control unit of the transmission.

An object of the present invention is providing a system able to control the transmission of a vehicle such as a wheel loader, excavator, telehandler and other earth moving vehicles of forestry vehicles such as skidders, more effectively in cases of sudden variations of a load torque or load force, such as during a pile entering manoeuvre.

### Summary of the invention

In a first aspect of the invention, this object is achieved through a method having the features according to claim **1**. In a second aspect of the invention, this object is achieved through a control system having the features according to claim **10**.

In a third aspect of the invention, this object is achieved through a vehicle having the features according to claim **11**. In a fourth aspect of the invention, this object is achieved through a computer program having the features according to claim **12**.

Features and advantages of the present invention will anyway be more readily understood from the following description given by way of non-limiting examples with reference to the accompanying drawings.

### List of Figures

Figures **1** and **2** show a functional scheme of a portion of a vehicle, a transmission and a control system according to a first and to a second embodiment of the invention respectively;
Figure **3** shows the graph of a possible approximation of the transmission rotational inertia as function of its gear rate.

## Detailed description

Unless differently specified, in the present description:

- the term "to determine" indicates both measuring and calculating, estimating something;
- wording such as "mechanical transmission" or "mechanical coupling" means a transmission or couplings through gears, chains, positive mechanical joints or frictions and not comprising, for example, hydraulic or electromagnetic joints or couplings.

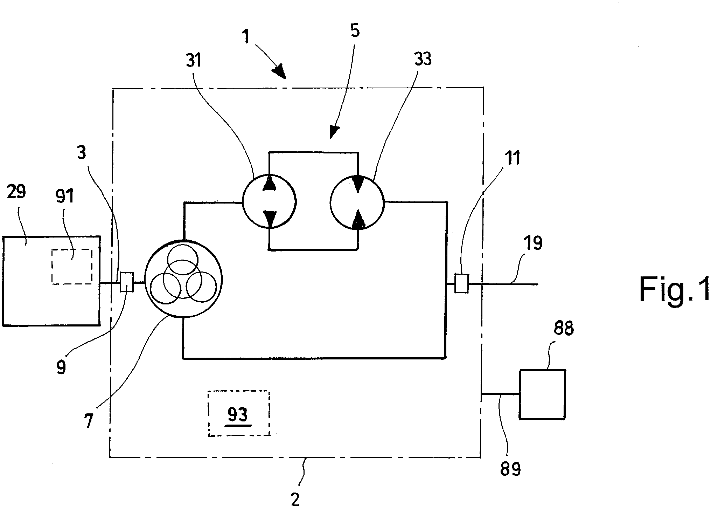

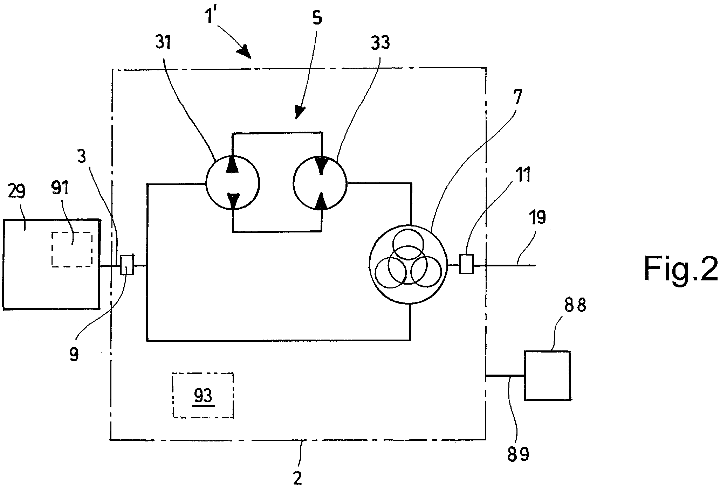

Figure **1** relates to a vehicle and to a continuously variable transmission **1** according to a first particular embodiment of the invention.
The transmission **1,** as well as the transmission **1**' of Figure **2,** can be assembled in vehicles such as wheel loaders, excavators, telehandlers and other earth moving vehicles of forestry vehicles such as skidders.
The transmission **1** preferably comprises a first transmission input shaft **3,** a first output shaft **19,** an epicyclic reduction gear assembly **7** and a hydraulic transmission **5.**
Preferably the hydraulic transmission **5** comprises a hydraulic pump **31** and a hydraulic motor **33** fed with hydraulic fluid such as mineral oil by the hydraulic pump **31.** The hydraulic pump **31** is fed with hydraulic fluid by the hydraulic motor **33.** The pump **31** and/or motor **33** are variable displacement pump and motor respectively.
The epicyclic reduction gear assembly **7** preferably comprises a sun gear, one or more satellite gears and a carrier assembly (not shown).
The sun gear engages one or more of the satellite gears.
The transmission **1, 1**' preferably further comprises a box or other housing **2** containing the hydraulic pump **31** and the hydraulic motor **33.**
The above-mentioned vehicles are usually provided with a main engine, also referred to as a primary engine **29** in the present description. The primary engine **29** provides the vehicle with all or with a major part of the mechanical and electrical power, in order to drive either the wheels or tracks through which the vehicle moves and the vehicle implements **88** such as a mechanical arm, a fork, a crane, a blade or bucket. Consequently, the mechanical power produced by the primary engine is usually split in two or more parts, one part used for driving the vehicle wheels or tracks and another part for driving the implements. This splitting can be made, for example, through suitable gears and possibly upstream the transmission **1, 1'**, as shown in Figures **1, 2.**
The transmission **1,1**' can further comprise a second output shaft **89** arranged for driving the vehicle implements **88** and possibly driven by the first transmission input shaft **3** through a purely mechanical transmission system, that is through a mechanical transmission assembly comprising mechanical couplings such as gears, frictions and chains and not hydraulic, electromagnetic or other fluidic transmissions or joints.
The first transmission input shaft **3** can be integral with, and hence kinematically coincide with, the output shaft **3** of the primary engine **29**.
The first output shaft **19** can be arranged for driving the wheels or tracks through which the vehicle moves. Preferably the transmission **1, 1**' is arranged for driving the first **19** and the second output shaft **89** independently one from another, so as to allow the implements **88** be driven when the vehicle is still.
During the operation of the transmission **1** the output shaft is subject to a load torque and the input shaft **3** is driven by the primary engine **29** of the vehicle. The engine **29** can be provided with one or more pistons or with a turbine.
In an aspect, the invention relates to a method for automatically controlling the gear ratio of a transmission (**1**) comprising the following steps:

- determining the disturbance torque fraction (T_ext) of the load torque applied to the first input shaft (**3**) at a predetermined instant (i), that is a part of the overall load torques applied to the first input shaft (**3**) and determined on the basis of the rotational speed (**n_eng**) and/or rotational acceleration of the first input shaft (**3**) and of one or more of the following quantities;
- the torque (T_eng) applied to the engine shaft and/or first input shaft **3** by one or more pistons;
- the rated output torque (T_c) applied by the transmission to the output shafts;
- the rotational inertia of the primary engine (J_eng) reduced to the first input shaft **3**;
- the rotational inertia (J_htv) of the transmission (**1**) reduced to the first transmission input shaft **3**.

In case the primary engine **29** drives the first input shaft **3** of the transmission **1, 1**' through a reduction gear (not shown), the following equations will be modified accordingly so as to take into account its inertia with a proper reduction to the relevant shaft.

The wording "rated output torque T_c indicates the fraction which can be determined or provided, through estimate and/or measurement, of the overall output torque applied by the transmission to the output shafts, namely to the first **19,** the second output shafts **88** and further output shafts, if any.

The wording "disturbance torque fraction" indicates a possible portion of the overall load torque applied to the first input shaft **3** and a possible disturbance; however, it implies no particular limitations or features of such torque: for example the disturbance torque fraction T_ext has not necessarily a particularly irregular and jagged waveform, a particular frequency spectrum or a more or less dominant random nature, but can be for example also a null or non-null torque constant over the time.

The physical significance of the disturbance torque fraction T_ext can be more easily understood from the following Euler's equation of the first input shaft **3**. In a simplified mathematical model, the vehicle comprises the primary engine **29,** such as a diesel engine, the continuously variable transmission **1** (CVT) and the vehicle implements **88.**

As a simplification, the following Euler's equation [R.**1**] can be written defining the equilibrium of an equivalent shaft. The equivalent shaft speed is that of the first input shaft **3,** thus the rated output torque T_c and the rotational inertia of the engine shaft and the transmission rotary elements must be reduced to the first input shaft **3**:

$$[R.1]$$

$$\left( J_{HVT\,(r_{act})} + J_{eng} \right) * \dot{n}_{eng} = T_{eng} - T_{ext} - f\left( r_{act}, T_c \right)$$

wherein the meanings of the symbols are the following:

| | |
|---|---|
| $J_{HVT}$ | J_hvt, rotational inertia of the transmission **1** reduced to the first input shaft **3** |
| $J_{eng}$ | J_eng, rotational inertia of the primary engine **29** reduced to the input shaft **3** |
| $r_{act}$ | r_act, present ratio of the transmission **1** |
| $n_{eng}$ | n_eng, rotational speed of the input shaft **3** |
| $\dot{n}_{eng}$ | rotational acceleration of the input shaft **3** |
| $T_{eng}$ | T_eng, torque applied to the shaft of the primary engine **29** by its pistons |
| $T_{ext}$ | T_ext, disturbance torque fraction |
| $T_c$ | T_c, rated output torque |

The ratio $r_{act}$ of the transmission **1** is the rate of the rotational speed $n_c$ of the first output shaft **19** to the rotational speed $n_{eng}$ of the first input shaft of the transmission.

That is, $r_{act}$ is so defined:

$$[R.2]$$

$$r_{atc} = \frac{n_c}{n_{eng}}$$

The rotational speeds $n_c$ and $n_{eng}$ can be measured through suitable sensors **9, 11** arranged within the transmission box or housing **2** or, in the alternative, be provided by the engine logic control unit **91** described hereinafter.

The rotational inertia $J_{eng}$ of the engine **29** is a constant parameter easy to be determined with the information of the engine manufacturer; it can be finally determined when designing the control algorithm or when setting the vehicle. The rotational inertia $J_{HVT}$ reduced to the first input shaft **3** depends on the gear ratio $r_{act}$ of the transmission **1,** that is the following general relation:

**EP 3 217 043 A1**

[R.3]

$$J_{HVT} = f\left(r_{act}\right)$$

meaning that $J_{HVT}$, in general, is a function of $r_{act}$, in particular is a function known to the transmission's manufacturer. The function $J_{HVT}(r_{act})$ can be approximated with sufficient precision and with no excessive calculation burden for the logic units, for example through a spline interpolation of as much rectilinear segments as the number of drive ranges of the transmission concerned.

Preferably the primary engine **29** or more generally the vehicle is provided with an engine logic control unit **91**, commonly referred to ECU in the technical jargon, and the transmission **1** is provided with a transmission logic control unit (TCU) **93**. The engine logic unit or ECU **91** has the task of controlling and monitoring the operation of the engine **29** and it is usually designed and provided by the manufacturer of the motor or of the vehicle. The task of the transmission logic unit or TCU **93** is that of controlling and monitoring the operation of the transmission **1** at a more local level, even if cooperating with the engine logic unit/ECU **91** and other possible logic units mounted on the vehicle.

$T_{eng}$ can be quite simply read, for example in real time from the engine logic unit/ECU **91**, which usually detects or however determines such information, and then communicated to the transmission logic unit/TCU **93**. In this way the transmission logic unit/TCU **93** can acquire the information $T_{eng}$ in quite a simple, reliable and swift way.

The rated output torque Tc is the load torque of the driving wheels or tracks on which the vehicle moves. The term

$$f\left(r_{act}, T_c\right)$$

indicates the rated output torque reduced to the first input shaft **3** of the transmission **1**.

It can be approximated according to the following equation depending on the mechanical construction of the transmission **1** and or the overall vehicle:

[R.4]

$$f\left(r_{act}, T_c\right) = r_{act} * T_c$$

Inserting the equation [R.3] in equation [R.1], the latter can be rewritten as follows:

[R.5]

$$T_{ext} = T_{eng} - r_{act} * T_c - \left(J_{eng} + J_{HVT}\right) * \dot{n}_{eng}$$

According to relation [R.5], the $T_{ext}$ has the physical meaning of any possible further load torque applied to the first input shaft **3** besides the load torque of the drive wheels or tracks. As in the transmission **1, 1'**, Figures **1, 2**-$T_{ext}$ can correspond to the torque produced by the implements **88** and, in particular, by the implements shaft **89**. Text can also correspond to other torques, which can be difficultly provided, such as the power taken up by:

- hydraulic power devices necessary for the operations of the vehicle;
- the hydraulic pump driving the steering cylinders;
- the fan cooling the radiator;
- frictions.

Advantageously $r_{act}$ is determined through relation [R.2] measuring $n_c$ and $n_{eng}$ through the above mentioned suitable sensors arranged for example within the box or other housing 2 of the transmission **1, 1'**.

Advantageously Tc can be determined from the output torque Ts of the hydraulic motor through the following relation:

5

[R.6]

$$T_s = \frac{\Delta p * V_{A6VM}}{2\pi}$$

wherein the meaning of the symbols is the following:

| $\Delta p$ | delta_p: difference between the pressure at the inlet and outlet port of the motor **33**,-between the pressure at the inlet and outlet port of the pump **31** or between the outlet and the inlet ports of the pump **31** |
|---|---|
| $V_{A6VM}$ | swept volume of the hydraulic motor **33** or of the pump **31** respectively |

Advantageously delta_p is measured for example in real time, for example through suitable sensors arranged at the inlet and outlet ports of the motor **33** and/or the pump **31**.
$V_{A6VM}$ can be estimated or measured.
From the previous considerations, it follows that all the entities of the right term of relation [R.**5**] are known either through measuring or through estimation. In particular, they can be acquired at each instant (i) and the disturbance torque fraction $T_{ext}$ can be consequently determined at each instant (i) and then advantageously used in the following estimations.
In a particular embodiment, the previous considerations can be used for determining the maximum torque (T_c, limit) that the hydraulic transmission **5** can apply to the first output shaft **19** at a plurality of instants (i) without causing the stall of the primary engine (**29**).
Such maximum torque $T_{c,limit}$, T_c,limit can be determined as function of one or more of the following quantities:

- the maximum torque (T_max, eng, $T_{max,eng}$) that the primary engine (**29**), for example through its pistons, is allowed to apply to the engine shaft and/or to the first input shaft (**3**); it is a reference torque determined according to different needs and criteria;
- the disturbance torque fraction ($T_{ext}$, T_ext);
- the rotational inertia (J_htv) of the transmission (1);
- the target rotational acceleration (n'_eng, tgt,

$$\dot{n}_{eng,tgt}$$

) of the engine/first input shaft (**3**);
-the ratio (r_act, $r_{act}$) of the rotational speed (n_c, $n_c$) of the first output shaft (**19**) to the rotational speed (n_eng, $n_{eng}$) of the first input shaft (**3**).

Such maximum torque T_max, eng can be determined, for example, by the engine logic control unit **91** and can be defined, for example, as the maximum target torque the engine can actually supply.
More particularly such maximum torque can be determined according to the following relation:

[R.7]

$$T_{c,limit} = \frac{T_{max,eng} - T_{ext} - \left(J_{HVT} + J_{eng}\right) * \dot{n}_{eng,tgt}}{r_{act}}$$

wherein the quantities at the right term of the equation have been calculated or measured at the previous instant (i-**1**). For example, at the previous instant (i-**1**) or at previous instants (i-k) wherein k ≥ **1**:

- $T_{max,eng}$ is provided to the TCU **93** by the ECU **91** and is the maximum engine torque available at the present engine speed, and it is determined considering for example pollution norms.

- $T_{ext}$ can have been determined through relation [R.6];
- $J_{HVT}$ can have been determined through relation [R.3];
- $J_{eng}$ is a known parameter, as already discussed;
- $n'_{eng,tgt}$ is a variable tuned by the transmission's manufacturer and is a target value the vehicle seeks to reach;
- $r_{act}$ can have been determined through relation [R.2].

Relation [R.7] is advantageously used when the transmission **1** operates in the first drive range, that is at the drive range corresponding to the lowest speeds of the first output shaft **19**.
Relation [R.7] can be applied in case the control variable of the system is the ratio $r_{act}$ or a pressure, delta_p, $\Delta p$.

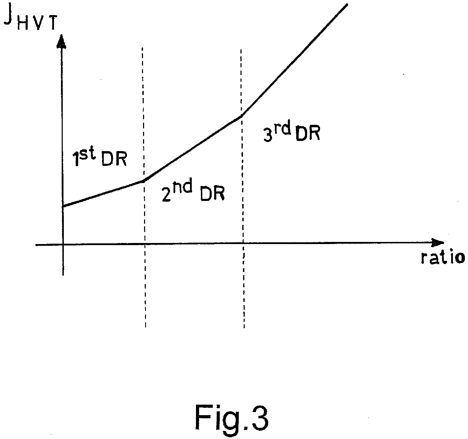

In a particular embodiment, the previous considerations can be used for determining the gear ratio $r_{act}$ of the transmission **1** able to avoid engine overload conditions, for example the maximum value of the overall gear ratio $r_{act}$ that can be set. For sake of simplicity, the transmission inertia JHVT can be expressed through a spline function made up of linear segments, according to relation [R.**9**] and Figure **3**.
In each linear segment the inertia $J_{HVT}$ can be expressed through such a relation:

$$[R.\textbf{8}]$$

$$J_{HVT} = m * r_{act} + q$$

wherein m and q are known parameters from the transmission construction and different -at least in principle- for each drive range.
The Euler's equation [R.**1**] can accordingly be rewritten as follows:

$$[R.\textbf{9}]$$

$$r_{act,tgt} = \frac{T_{max,eng} - T_{ext} - (q + J_{eng}) * \dot{n}_{eng,tgt}}{m * \dot{n}_{eng,tgt} + T_c}$$

wherein:

- as already described, m and q are known parameters easily derivable from the constructional features of the transmission;
- $T_{max,eng}$ can be provided to the transmission logic unit/TCU 93 by the engine logic unit/ECU 91 and is the maximum engine torque available at the present engine speed, and it can be determined considering for example pollution norms and other requirements; $-T_{ext}$ can have been determined through relation [R.6];
- $J_{eng}$ is a known parameter, as already discussed;
- $n'_{eng,tgt}$ is a variable tuned by the transmission's manufacturer.

A major feature of this control strategy is reducing the overall gear ratio $r_{act}$ of the transmission 1, for example during a pile entering maneuvre.
Since the ratio set point $r_{act,tgt}$ computed at each instant (i) is a target value, proper signal conditioning can be applied in order to avoid ratio control instability and unacceptable vehicle dynamics.

If:

- in the second drive range, that is the drive range corresponding to the second lowest speeds of the first output shaft **19**, both the mechanical and hydraulic power branches of the transmission **1, 1'** drive the output shafts **19, 89** transferring to them a substantial amount of power; and
- in the first drive range only the hydraulic power branch of the transmission **1, 1'** drives the output shafts **19, 89** transferring to them a substantial amount of power, while the mechanical power branch transfers to the shafts **19, 89** a marginal amount of mechanical power;

relation [R.9] is advantageously used when the transmission **1, 1'** operate in the second drive range, while relation [R.7] is advantageously used when the transmissions, **1, 1'** operate in the first drive range.
In the transmission **1** of Figure **1** the epicyclic reduction gear assembly **7** splits the mechanical power of the output shaft **3** of the primary engine **29** driving a mechanical power branch and a hydraulic power branch.

In the transmission **1'** according to the particular embodiment of the invention shown in Figure **2** the power of a mechanical power branch and of a hydraulic power branch are summed in the epicyclic reduction gear assembly **7**.

The previous determinations of quantities such as $T_{ext}$, $J_{HVT}$, $J_{eng}$, $r_{act}$, $r_{act,tgt}$, $n_{eng}$, $n_{eng,tgt}$, $n_c$ and time derivatives thereof, $T_{eng}$, $T_{max,.eng}$, $T_c$, $T_{c,limit}$, $T_s$, $\Delta p$ (delta_p), $V_{A6VM}$ can be made iteratively and preferably in real time over a plurality of time instants (i-k)... (i-**2**), (i-**1**), (i), (i+**1**), (i+**2**) ... (i+h), for example applying the relations [R.**1**]-[R.**9**]. Such iterative determinations can be carried out for example through the logic units **91, 93**. Such logic units can have, for example, digital processors.

The previously described control methods and principles allow avoiding excessive overloads or the stall of the primary engine due to sudden loads like during a pile entering maneuvre of a wheel loader. Such control methods can operate quite effectively almost with no knowledge of the overall traslational inertia of the whole vehicle or real time measure of the load torque of the implements and can be successfully designed and applied not only by designers of the whole vehicle but also by the designers of transmissions only.

Furthermore, the previously described control methods process input variables and parameters easily provided by vehicles manufacturers and the engine logic control unit **91**.

The embodiments previously described can undergo several changes and variations yet without departing from the scope of the present invention. For example, the relations [R.**1**]-[R-**9**] can be rewritten in a more sophisticated way in order to take into account the mechanical efficiency of the transmission **1, 1'**,-and of their components. The engine logic unit/ECU **91** and the transmission logic unit **93** can be mounted on the primary engine **29** and the transmission **1** respectively, but do not necessarily need to, and can also be arranged far away from the engine **29** and the transmission **1**.

Furthermore, all details are replaceable with technically equivalent elements. For example, the used materials, as well as their dimensions, can be of any kind according to the technical needs. It is to be intended that an expression such as "A comprises B, C, D" also comprises and describes the particular case in which "A consists of B, C, D". The wordings "device comprising an entity F" or "device comprising the entity F" are to be understood that the device comprises one or more entities F. An expression such as "an item X" indicates "one or more items X". The examples and lists of the possible variations of the present application are to be intended as no exhaustive.

**Claims**

1. Method for automatically controlling the gear ratio of a transmission (**1, 1'**) of a vehicle such as a wheel loader, excavator, telehandler and other earth moving vehicles of forestry vehicles such as skidders, wherein:

   - the transmission comprises a first input shaft (**3**), a first output shaft (**19**), an epicyclic reduction gear assembly (**7**) and a hydraulic transmission (**5**);
   - during the operation of the transmission (**1**) the first output shaft (**19**) is subject to a load torque and the first input shaft (**3**) is driven by a primary engine (**29**);

   said method comprising the step of determining the disturbance torque fraction (T_ext) of the load torque applied to the first input shaft (**3**) at a predetermined instant (i) on the basis of the rotational speed (**n_eng**) of the first input shaft (**3**) and of one or more of the following quantities:

   - the torque (T_eng) applied to the engine shaft or to the first input shaft (**3**) by the primary engine (**29**);
   - the torque (T_c) applied at least to the first output shaft (**19**);
   - the rotational inertia of the primary engine (J_eng) reduced to the first input shaft (**3**);
   - the rotational inertia (J_htv) of the transmission (**1**) reduced to the first input shaft (**3**).

2. Method according to claim **1**, wherein:

   - the transmission (**1**) comprises a transmission logic control unit (**93**);
   - the vehicle comprises an engine logic control unit (**91**) programmed or however arranged for controlling at least the operation of the primary engine (**29**);

   said method comprising the steps of:

   - determining through the engine logic unit (**91**) the torque (T_eng) applied to the engine shaft and/or to the first input shaft (**3**) by the primary engine (**29**);
   - transmitting said torque (T_eng) to the transmission logic control unit (**93**).

3. Method according to claim **1**, wherein:

   - the hydraulic transmission (**5**) is an infinitely adjustable transmission unit (**5**) driven by the first input shaft (**3**) and comprising a second input shaft (**85**) and a second output shaft (**87**);
   - the epicyclic reduction gear assembly (**7**) is driven both by the first input shaft (**3**) through a purely mechanical transmission system and by the second output shaft (**87**).

4. Method according to claim **1**, wherein the method comprises the steps of determining the torque (f(T_c, r act)) applied by the hydraulic transmission (**5**) to the primary engine output shaft or to the first input shaft (**3**) on the basis of:

   - the gear ratio (r_act) of the rotational speed (n_c) of the first output shaft (**19**) to the rotational speed (n_eng) of the first input shaft (**3**); and
   - the torque (T_c) applied by the first output shaft (**19**).

5. Method according to claim **4**, comprising the step of determining the load torque (f(T_c, r act)) applied by the hydraulic transmission (**5**) to the primary engine output shaft or to the first input shaft (**3**) on the basis of the product (r_act*T_c) of the torque (T_c) applied by the first output shaft (**19**) and of the ratio (r_act) of the rotational speed (n_c) of the first output shaft to the rotational speed (n_eng) of the first input shaft (**3**).

6. Method according to claim **1**, comprising the step of carrying out an iterative determination of the disturbance torque fraction (T_ext) of the load torque on the first input shaft (**3**) at a plurality of time instants (i) on the basis of the values of one or more of the following entities at one or more of the preceding time instants (i-**1**, i-**2**, ... i-k):

   - the torque (T_eng) applied to the engine shaft or to the first input shaft (**3**) by the primary engine (**29**);
   - the torque (T_c) applied by the transmission to the first output shaft (**19**);
   - the rotational inertia of the primary engine (J_eng) reduced to the first input shaft (**3**);
   - the rotational inertia (J_htv) of the transmission (**1**) reduced to the first input shaft (**3**).

7. Method according to one or more claims **1-6,** comprising the step of carrying out an iterative determination of the maximum torque (T_c, limit) at a plurality of instants (i) that can be applied to the first output shaft (**19**) without causing the stall of the primary engine (**29**) on the basis of one or more of the following quantities determined at one or more of the previous time instants (**i-1**; i-**2**; ... i-k...):

   - the maximum torque (T_max, eng) that the primary engine (**29**) can apply to the engine shaft and/or to first input shaft (**3**);
   - the disturbance torque fraction (T_ext);
   - the rotational inertia (J_htv) of the transmission (**1**);
   - the target rotational acceleration (n'_eng, tgt) of the engine shaft and/or the first input shaft (**3**) determined, for example, by the engine logic control unit (**91**) and/or by the transmission logic control unit (**93**);
   - the gear ratio (r_act) of the rotational speed (n_c) of the first output shaft (**19**) to the rotational speed (n_eng) of the first input shaft (**3**).

8. Method according to one or more claims **1-6,** comprising the step of carrying out an iterative determination of the maximum gear ratio (r_act,tgt) which can be set at each time instant (i) so as to avoid engine overload conditions on the basis of one or more of the following quantities determined at one or more previous time instants (i-**1**; i-**2**; ... i-k... ):

   - the maximum torque (T_max, eng) that the primary engine (**29**) can apply to the engine shaft and/or to the first input shaft (**3**);
   - the disturbance torque fraction (T_ext) of the load torque;
   - the target rotational acceleration (n'_eng, tgt) of the engine shaft and/or the first input shaft (**3**) determined, for example, by the engine logic control unit (**91**) and/or by the transmission logic control unit (**93**);
   - the torque (T_c) applied by the transmission (**1,1**') at least to the first output shaft (**19**);
   - the rotational inertia of the primary engine (J_eng).

9. Method according to one or more of the preceding claims, wherein the primary engine (**29**) is provided with one or more pistons; said method comprising the step of determining the disturbance torque fraction (T_ext) of the load torque applied to the first input shaft (**3**) at a predetermined instant (i) on the basis of the torque (T_eng) applied to the engine shaft or to the first input shaft (**3**) by one or more pistons.

10. Control system for controlling the gear ratio of a transmission (**1**) of a vehicle such as a wheel loader, excavator, telehandler and other earth moving vehicles of forestry vehicles such as skidders, wherein the vehicle comprises:

   - a primary engine (**29**);
   - a transmission (**1**) comprising a first input shaft (**3**), a first output shaft (**19**), an epicyclic reduction gear assembly (**7**) and a hydraulic transmission (**5**);

   wherein:

   - during the operation of the transmission (**1**) the first output shaft (**19**) is subject to a load torque and the first input shaft (**3**) is driven by the primary engine (**29**);
   - the control system comprises a transmission logic control unit (**93**) and/or an engine logic control unit (**91**) programmed or however arranged for carrying out the method according to one or more claims **1-9**.

11. Vehicle such as a wheel loader, excavator, telehandler and other earth moving vehicles of forestry vehicles such as skidders, provided with:

   - a primary engine (**29**);
   - a transmission (**1**) comprising a first input shaft (**3**), a first output shaft (**19**), an epicyclic reduction gear assembly (**7**) and a hydraulic transmission (**5**);.

   wherein:

   - during the operation of the transmission (**1**) the first output shaft (**19**) is subject to a load torque and the first input shaft (**3**) is driven by the primary engine (**29**);
   - the vehicle further comprises a control system according to claim **10**.

12. Computer program containing instructions for carrying out the method according to claim **1** when running on a logic control unit of a vehicle having the features according to claim **11.**

Fig.1

Fig.2

Fig.3

Europäisches
Patentamt

European
Patent Office

Office européen
des brevets

# EUROPEAN SEARCH REPORT

**Application Number**

EP 16 42 5021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/260962 A1 (LI WEI [US]) 3 October 2013 (2013-10-03) * the whole document * ----- | 1-12 | INV. F16H61/462 B60W10/06 B60W10/103 B60W30/188 |
| X | US 2013/325271 A1 (LISTER BRIAN [US] ET AL) 5 December 2013 (2013-12-05) * the whole document * ----- | 1-12 | |
| X | US 2013/110336 A1 (BRAIER RAN [IL] ET AL) 2 May 2013 (2013-05-02) * the whole document * ----- | 1-12 | |

**TECHNICAL FIELDS SEARCHED (IPC)**

F16H
B60W

The present search report has been drawn up for all claims

| Place of search | Date of completion of the search | Examiner |
|---|---|---|
| Munich | 9 September 2016 | Meritano, Luciano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                                          
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 42 5021

This annex lists the patent family members relating to the patent documents cited in  the above-mentioned European search report.
The members are as contained in the European Patent Office EDP file on
The European Patent Office is in no way liable for these particulars which are merely given for the purpose of information.

09-09-2016

| Patent document cited in search report | | Publication date | Patent family member(s) | | Publication date |
|---|---|---|---|---|---|
| US 2013260962 | A1 | 03-10-2013 | NONE | | |
| US 2013325271 | A1 | 05-12-2013 | CN | 104334389 A | 04-02-2015 |
| | | | DE | 112013002704 T5 | 12-03-2015 |
| | | | US | 2013325271 A1 | 05-12-2013 |
| | | | WO | 2013181048 A1 | 05-12-2013 |
| US 2013110336 | A1 | 02-05-2013 | BE | 1020463 A5 | 05-11-2013 |
| | | | CA | 2800416 A1 | 08-12-2011 |
| | | | CN | 103025594 A | 03-04-2013 |
| | | | EP | 2576309 A1 | 10-04-2013 |
| | | | HK | 1177722 A1 | 05-08-2016 |
| | | | JP | 2013532090 A | 15-08-2013 |
| | | | KR | 20130103680 A | 24-09-2013 |
| | | | SG | 185771 A1 | 28-12-2012 |
| | | | US | 2013110336 A1 | 02-05-2013 |
| | | | WO | 2011151816 A1 | 08-12-2011 |

EPO FORM P0459

For more details about this annex : see Official Journal of the European Patent Office, No. 12/82